# EUROPÄISCHE PATENTANMELDUNG

(11) **EP 1 411 263 A2**
(43) Veröffentlichungstag der Anmeldung: **21.04.2004**
(21) Anmeldenummer: 03023010.6
(22) Anmeldetag: 11.10.2003
(51) Int. Cl.: F16D 65/78

(54) **Kühlkreislauf für den Antriebstrang eines Kraftfahrzeugs**

(30) Priorität: 16.10.2002 DE 10248176
(71) Anmelder: ZF FRIEDRICHSHAFEN Aktiengesellschaft, 88038 Friedrichshafen (DE)
(72) Erfinder: Alvater, Roland, 88046 Friedrichshafen (DE)

(57) **Zusammenfassung**

Es wird ein Kühlkreislauf für den Antriebstrang eines Kraftfahrzeugs, der einen Wandler (3), einen Retarder (1), einen Wärmetauscher (5), eine Ölpumpe (6) und einen Ölsumpf (7) umfasst, vorgeschlagen, bei dem der Wärmetauscher (5) bei inaktivem Retarder (1) zwischen den Wandler (2) und die Getriebeschmierung (8) schaltbar ist, und wobei der Wärmetauscher (5) im Retarderbetrieb in Ölflussrichtung hinter den Retarder (1) und vor die Getriebeschmierung (8) schaltbar ist.

## Beschreibung

Die vorliegende Erfindung betrifft einen Kühlkreislauf für den Antriebstrang eines Kraftfahrzeugs gemäß dem Oberbegriff des Patentanspruchs 1.

Nach dem Stand der Technik wird bei Getrieben, welche einen Retarder als verschleißfreie Bremse aufweisen, zum Abführen der als Wärme auftretenden Verlustleistung ein Wärmetauscher eingesetzt. Dieser wird über zwei Kühlerumschaltventile je nach Betriebszustand in dem Getriebehydraulik- oder im Retarderkreislauf eingebunden. Während des Retarderbetriebs wird folglich der Hydraulikkreislauf nicht gekühlt, wodurch es zu Überhitzungen kommen kann.

Bei erhöhten Kühlmitteltemperaturen besteht jedoch die Gefahr, dass das Öl höheren Temperaturen ausgesetzt wird, was eine schnelle Alterung des Öls zur Folge hat; dadurch wird die Öllebensdauer verkürzt.

Die DE 198 54 389 A1 beschreibt einen Kühlkreislauf für den Antrieb von Kraftfahrzeugen, mit einer Abfuhrleitung, die den Antriebsmotor mit mindestens einem Radiator verbindet, mit einer Zufuhrleitung, die den Radiator mit dem Antriebsmotor verbindet, mit einem in die Abfuhrleitung eingesetzten Thermostaten und mit einer in die Zufuhrleitung eingesetzten Umwälzpumpe. Hierbei ist auf der Seite des Radiators und vor dem Motor ein Wärmetauscher vorgesehen, der einerseits von der Zufuhrleitung für den Motor durchsetzt wird und andererseits von einer mit dem Getriebe und ggf. dem Retarder verbundenen Leitung durchsetzt wird, die ihm das von Getriebe und ggf. vom Retarder erhitzte Kühlmittel zuführt.

Der vorliegenden Erfindung liegt die Aufgabe zugrunde einen Kühlkreislauf für den Antriebstrang eines Kraftfahrzeugs, der einen Wandler und einen Retarder umfasst, anzugeben, welcher die Nachteile des Standes der Technik vermeidet.

Insbesondere soll nur ein Kühlerumschaltventil erforderlich sein und Bauraum eingespart werden.

Diese Aufgabe wird durch die Merkmale des Patentanspruchs 1 gelöst. Weitere Ausgestaltungen und Vorteile gehen aus den Unteransprüchen hervor.

Demnach wird vorgeschlagen, den Wärmetauscher während des Retarderbetriebs im Kühlkreislauf hinter den Retarder und vor die Getriebeschmierung zu schalten, wobei er immer mit Öl durchströmt wird. Wenn der Retarder nicht benötigt wird, dann wird der Wärmetauscher zwischen Wandler und Getriebeschmierung geschaltet, wobei nur ein Kühlerumschaltventil benötigt wird. Der Retarder wird durch die offene Seite des Kühlerumschaltventils zum Ölsumpf hin entleert.

Gemäß einer bevorzugten Ausführungsform der vorliegenden Erfindung wird im Retarderbetrieb das Öl aus dem Ölsumpf durch eine Ölpumpe angesaugt und anschließend durch den Wandler, den Retarder und den Wärmetauscher der Schmierölversorgung zugeführt. Nach der Ölpumpe ist auch die Getriebesteuerung angeordnet.

Wenn der Retarder eingeschaltet wird, wird das Öl von einem Kühlerumschaltventil in den Retarder geleitet. Am Retarderaustritt, an dem die höchste Temperatur herrscht, wird durch die Retarderregel-einrichtung der Retarderregeldruck eingestellt, wobei dies mittels Ablassen von Öl erfolgt, das zum Wärmetauscher weitergeleitet wird. Das Öl als Arbeitsmedium des Retarders rotiert im Retarder oder kann über einen Ölkreislauf mit einer Blende oder Blendenfunktion vom Ölaustritt zum Öleintritt geführt werden. Öltemperaturen zur Systemkontrolle werden optional hinter dem Retarder und im Ölsumpf gemessen.

Wenn die Ölaustrittstemperatur einen bestimmten Grenzwert überschreitet, kann ein Regelventil geöffnet werden, das gekühltes Öl vom Wärmetauscher dem Retardereingang direkt zuführt.

Im Rahmen einer weiteren Ausführungsform können weitere Wärmetauscher vorgesehen sein, welche das Kühl- und Schmieröl zusätzlich kühlen. Diese Wärmetauscher können einzeln oder auch gemeinsam eingesetzt werden.

In einer besonders vorteilhaften Ausgestaltung sind das Kühlerumschaltventil und das Retardersteuerventil in einem Ventil kombiniert. Dadurch kann Bauraum eingespart werden.

Die hier vorgestellte Erfindung weist den Vorteil auf, dass nur ein Kühlerumschaltventil erforderlich ist; zudem wird eine effektive Kühlung des Steuerungs-, Schmier- und Kühlöls erzielt.

Des Weiteren wird eine sehr kompakte, bauraumsparende Bauweise realisiert, da die Ölleitungen mit kleinen Durchmessern ausgeführt werden können und nur eine Ölpumpe erforderlich ist.

Die Erfindung wird im folgenden anhand der beigefügten Figuren beispielhaft näher erläutert.
Es stellen dar:
- Fig. 1: eine schematische Darstellung des Aufbaus im Schub- und Zugbetrieb;
- Fig. 2: eine schematische Darstellung des Aufbaus im Retarderbetrieb;
- Fig. 3: eine Darstellung nach Fig. 1 mit kombiniertem Ventil;
- Fig. 4: eine Darstellung nach Fig. 2 mit kombiniertem Ventil;
- Fig. 5: eine weitere Ausführung nach Fig. 4 und
- Fig. 6: eine Darstellung einer weiteren Ausführungsform.

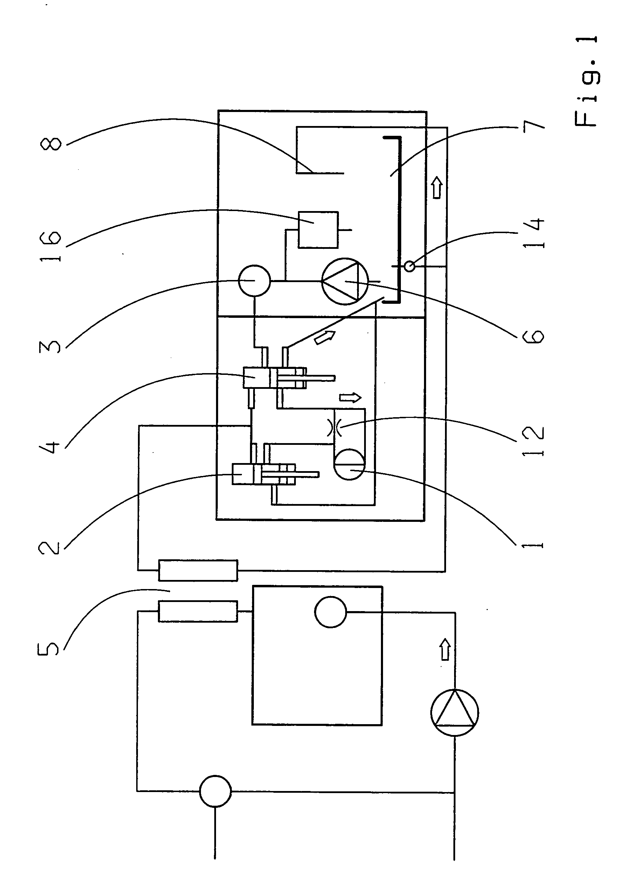

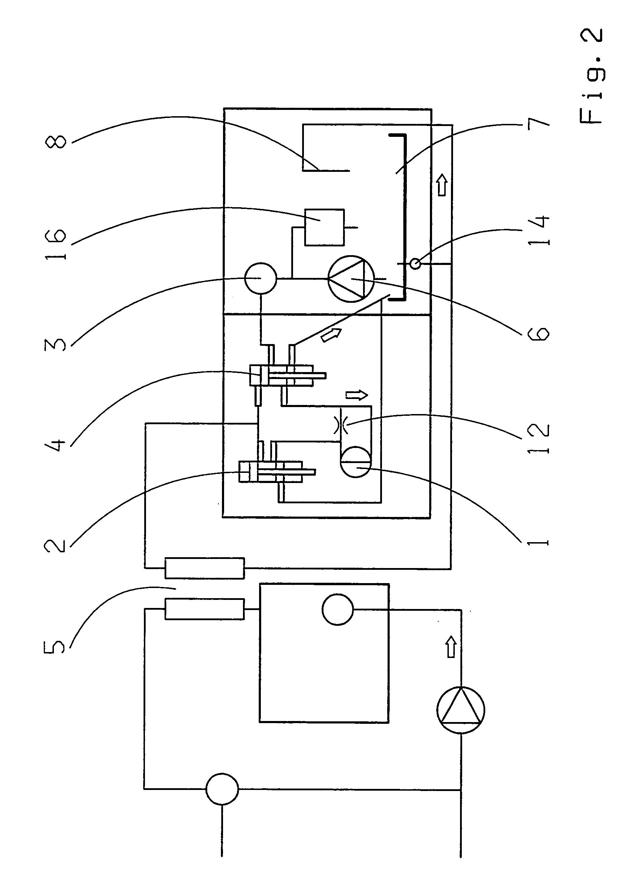

Gemäß Fig. 1 und Fig. 2 umfasst der erfindungsgemäße Kühlkreislauf für einen Antriebstrang einen Retarder 1 und einen Wandler 3, ein Retardersteuerventil 2, ein Kühlerumschaltventil 4, einen Wärmetauscher 5, eine Ölpumpe 6, einen Ölsumpf 7 und ein Ventil zur Schmierdruckbegrenzung 14. Das Öl wird mittels der Ölpumpe 6 aus dem Ölsumpf 7 angesaugt und im Retarderbetrieb (Fig. 2) durch den Wandler 3, den Retarder 1 und den Wärmetauscher 5 geführt, um anschließend der Getriebeschmierung 8 zugeführt zu werden. Zu diesem Zweck wird das Kühlerumschaltventil 4 derart geschaltet, dass das Öl den Retarder 1 durchströmen kann. Eine Getriebesteuerung 16 erhält ebenfalls von der Ölpumpe 6 gefördertes Öl. Wenn der Retarder im Zug- und Schubbetrieb nicht benötigt wird (Fig. 1), dann wird das Kühlerumschaltventil 4 derart geschaltet, dass das Öl vom Wandler 3 über den einen vorgesehenen Wärmetauscher 5 ohne die Integration des Retarders 1 in den Kühlkreislauf direkt in die Getriebeschmierung 8 geleitet wird. Auf diese Weise wird der Wärmetauscher 5 stets von Öl durchströmt. Der Retarder 1 wird durch die offene Seite des Kühlerumschaltventils 4 zum Ölsumpf 7 hin entleert.

Gemäß der Erfindung ist in Ölflussrichtung hinter dem Retarder 1 ein Retardersteuerventil 2 angeordnet, welches zum Zweck der Regelung des Retarders 1 eine entsprechende Menge Öl zum Wärmetauscher 5 durchlässt. Eine Blende 12 ist als Arbeitsblende für den Retarder 1 vorgesehen, welche zwischen Retardereingang und Retarderausgang angeordnet ist und den hydraulischen Kreislauf sicherstellt. Vorzugsweise ist die Blende 12 in das Statorgehäuse des Retarders 1 integriert. Hier kann auch der hydraulische Kreislauf selbst integriert sein.

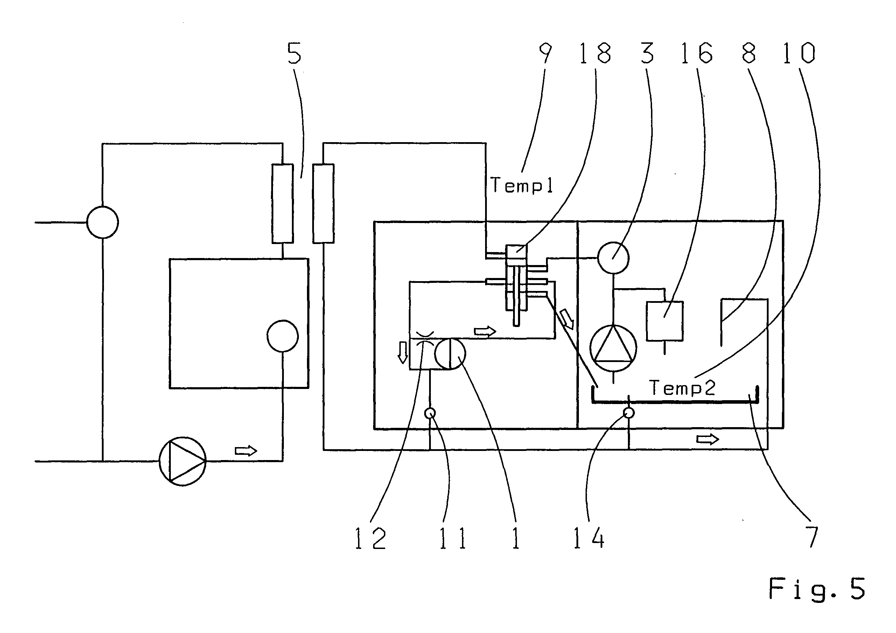

Während des Retarderbetriebs wird der Retarder gefüllt und der Regeldruck wird am Retarderaustritt über das Retardersteuerventil 2 eingestellt. Gemäß der Erfindung können zur Systemkontrolle Temperaturmesseinrichtungen 9, 10 vorgesehen sein, welche vorzugsweise hinter dem Retarder 1 bzw. im Ölsumpf 7 angeordnet sind (Fig. 5).

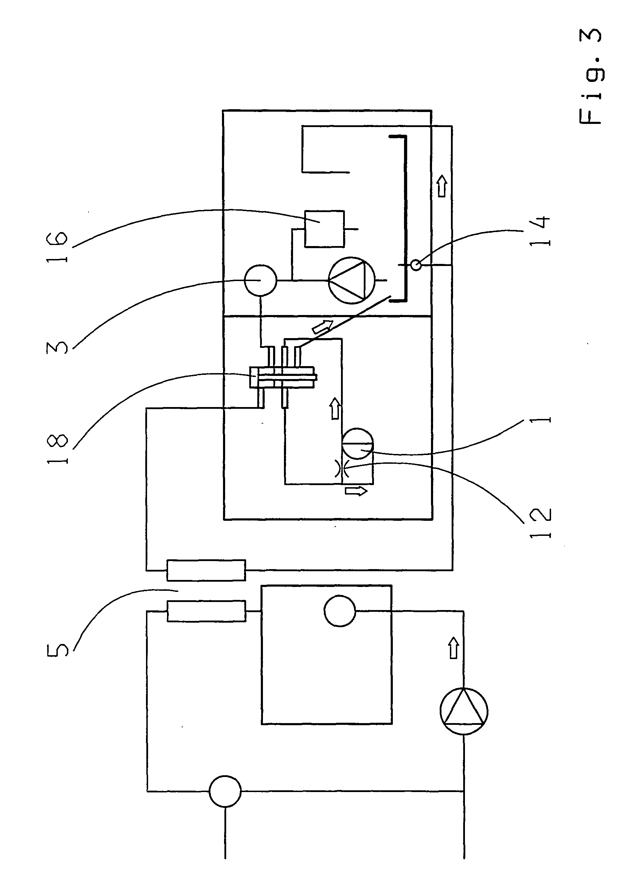

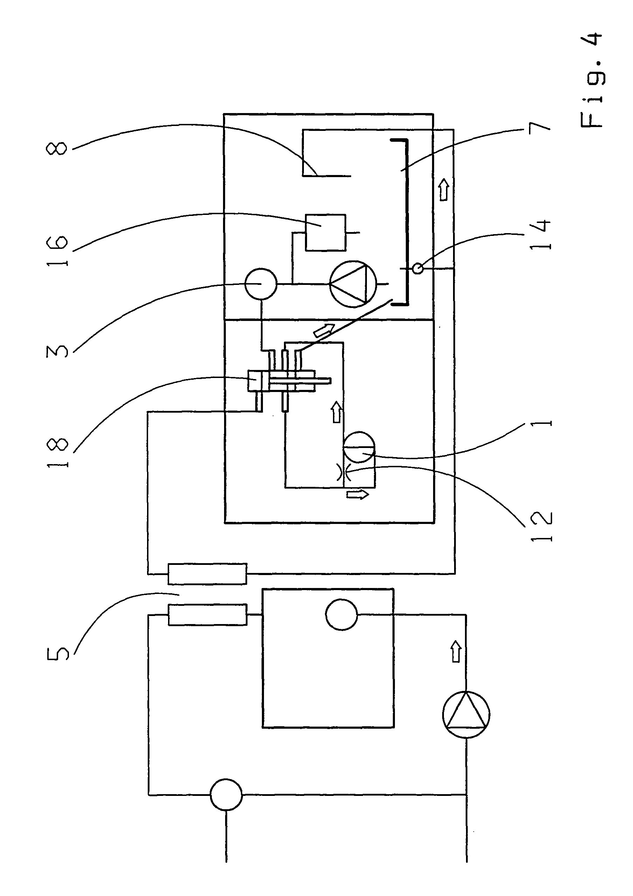

In Fig. 3 und Fig. 4 sind die Anordnungen nach Fig. 1 und Fig. 2 in einer veränderten Ausgestaltung dargestellt. Dabei sind das Kühlerumschaltventil 4 und das Retardersteuerventil in einem Kombinationsventil 18 zusammengefasst, das die Aufgaben beider Ventile übernehmen kann. Im normalen Zug- und Schubbetrieb steht das Kombinationsventil 18 in der Stellung nach Fig. 3, in der das Öl nach dem Wandler 3 dem Wärmetauscher 5 übergeben wird, während im Retarderbetrieb das Kombinationsventil 18 umschaltet und in der veränderten Stellung dann das Öl dem Retarder 1 zuführt.

Im Rahmen der in Fig. 5 gezeigten Ausführungsform ist ein weiteres Ventil 11 zwischen dem Wärmetauscherauslass und dem Retardereingang vorgesehen. Wenn die Ölaustrittstemperatur einen bestimmten Grenzwert überschreitet, kann dieses Ventil 11 geöffnet werden, um das gekühlte Öl vom Wärmetauscher 5 dem Retardereingang direkt zuführen.

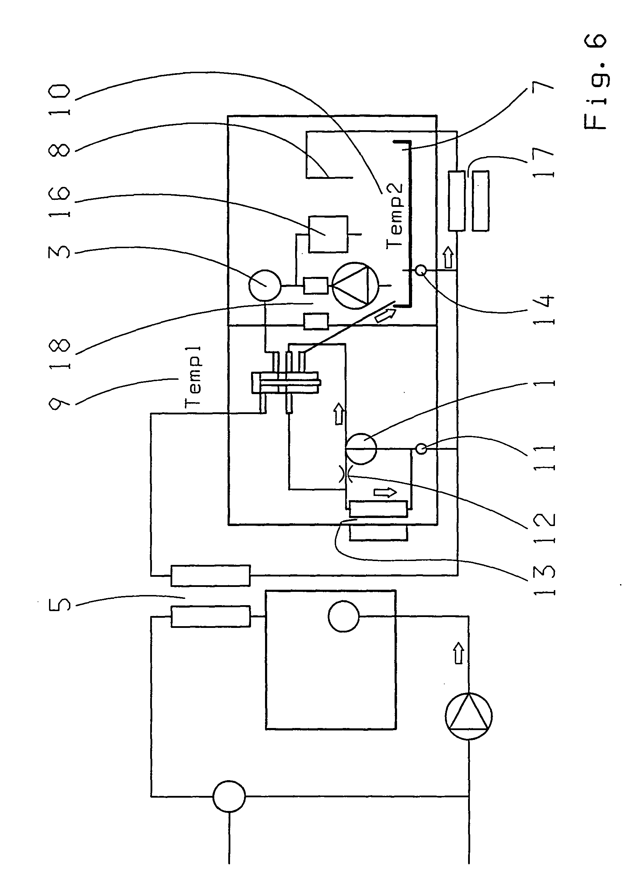

Gemäß der in Fig. 6 gezeigten Variante sind weitere Wärmetauscher 13, 15, 17 vorgesehen. Wärmetauscher 13 kühlt das heiße Retarderöl direkt. Dieser zweite Wärmetauscher 13 kann in das Retardergehäuse integriert oder als externer Wärmetauscher ausgebildet sein.

Der dritte Wärmetauscher 15 und vierte Wärmetauscher 17 kühlen das Kühl- und Schmieröl zusätzlich. Der zweite Wärmetauscher 13, dritte Wärmetauscher 15 und vierte Wärmetauscher 17 können einzeln, gemeinsam oder in anderer Kombination eingesetzt werden.

Durch die erfindungsgemäße Konzeption kann ein Retarder als Modul gefertigt und eingebaut werden, wobei dies ein Testen desselben erleichtert.

### Bezugszeichen

- 1: Retarder
- 2: Retardersteuerventil
- 3: Wandler
- 4: Kühlerumschaltventil
- 5: Wärmetauscher
- 6: Ölpumpe
- 7: Ölsumpf
- 8: Getriebeschmierung
- 9: Temperaturmesseinrichtung
- 10: Temperaturmesseinrichtung
- 11: Ventil
- 12: Blende
- 13: Wärmetauscher
- 14: Ventil
- 15: Wärmetauscher
- 16: Getriebesteuerung
- 17: Wärmetauscher
- 18: Kombinationsventil

## Patentansprüche

1. Kühlkreislauf für den Antriebstrang eines Kraftfahrzeugs, der einen Wandler (3) und einen Retarder (1) umfasst, enthaltend einen Wärmetauscher (5), eine Ölpumpe (6) und einen Ölsumpf (7), **dadurch gekenn-zeichnet, dass** der Wärmetauscher (5) bei inaktivem Retarder (1) zwischen den Wandler (2) und die Getriebeschmierung (8) schaltbar ist und dass der Wärmetauscher (5) im Retarderbetrieb in Ölflussrichtung hinter den Retarder (1) und vor die Getriebeschmierung (8) schaltbar ist.

2. Kühlkreislauf nach Anspruch 1, **dadurch gekennzeichnet, dass** in Ölflussrichtung hinter dem Wandler (3) ein Kühlerumschaltventil (4) vorgesehen ist, mittels dessen die Integration des Retarders (1) in den Kühlkreislauf erfolgt.

3. Kühlkreislauf nach Anspruch 1 oder 2, **dadurch gekennzeichnet, dass** in Ölflussrichtung hinter dem Retarder (1) ein Retardersteuerventil (2) angeordnet ist, welches zum Zweck der Regelung des Retarders (1) im Retarderbetrieb eine entsprechende Menge Öl zum Wärmetauscher (5) durchlässt.

4. Kühlkreislauf nach einem der vorangehenden Ansprüche, **dadurch gekennzeichnet, dass** zur Systemkontrolle Temperaturmesseinrichtungen (9, 10) vorgesehen sind, welche hinter in Ölflussrichtung hinter dem Retarder (1) bzw. im Ölsumpf (7) angeordnet sind.

5. Kühlkreislauf nach einem der vorangehenden Ansprüche, **dadurch gekennzeichnet, dass** ein weiteres Ventil (11) zwischen dem Wärmetauscherauslass und dem Retardereingang vorgesehen ist, so dass, wenn die Ölaustrittstemperatur einen bestimmten Grenzwert überschreitet, über dieses Ventil (11) gekühltes Öl vom Wärmetauscher (5) dem Retardereingang zugeführt wird.

6. Kühlkreislauf nach einem der vorangehenden Ansprüche, **dadurch gekennzeichnet, dass** für den Retarder (1) eine Blende (12) als Arbeitsblende vorgesehen ist, welche zwischen Retardereingang und Retarderausgang angeordnet ist und den hydraulischen Kreislauf sicherstellt.

7. Kühlkreislauf nach Anspruch 6, **dadurch gekennzeichnet, dass** die Blende (12) und/oder zumindest Teile des hydraulischen Kreislaufs in das Statorgehäuse des Retarders (1) integriert sind.

8. Kühlkreislauf nach einem der vorangehenden Ansprüche, **dadurch gekennzeichnet, dass** zum direkten Kühlen des heißen Retarderöls ein zweiter Wärmetauscher (13) vorgesehen ist, der in das Retardergehäuse integriert oder als externer Wärmetauscher ausgebildet ist.

9. Kühlkreislauf nach einem der vorangehenden Ansprüche, **dadurch gekennzeichnet, dass** zum zusätzlichen Kühlen des Kühl- und Schmieröls ein dritter Wärmetauscher (15) und/oder vierter Wärmetauscher (17) vorgesehen ist.

10. Kühlkreislauf nach einem der vorangehenden Ansprüche, **dadurch gekennzeichnet, dass** das Retardersteuerventil (2) und das Kühlerumschaltventil (4) in einem Kombinationsventil (18) zusammengefasst sind.
